# EUROPEAN PATENT APPLICATION

(11) **EP 2 133 786 A1**
(43) Date of publication of application: **16.12.2009**
(21) Application number: 08711465.8
(22) Date of filing: 18.02.2008
(51) Int. Cl.: G06F 3/12

(54) **DISPLAY TERMINAL, AND PRINTING-CONTROL PROGRAM**

(30) Priority: 28.03.2007 JP 2007083277
(71) Applicant: Brother Kogyo Kabushiki Kaisha, Nagoya-shi, Aichi 467-8561 (JP)
(72) Inventor: KONDO, Koichi, Nagoya-shi Aichi 467-8561 (JP)
(74) Representative: Kuhnen & Wacker
(86) International application number: PCT/JP2008/052641
(87) International publication number: WO 2008/117588

(57) **Abstract**

When a printer is connected, a print queue is checked. When there is a print queue job (YES at S300), its print target name and version are acquired (S305). When the print target name includes only a folder name (Yes at S310), print data of the latest file in the folder is created and transmitted to the printer (S315). When not only the folder name but also the version has been specified (YES at S320), print data of the specified version of the file is created and transmitted to the printer (S325). When the version has not been specified (NO at S320), print data of the latest version of the file is created and transmitted to the printer (S330).

## Description

### Technical Field

The present disclosure relates to a display terminal and a printing control program, and relates more specifically to a display terminal and a printing control program that are capable of controlling a version when printing is performed via the display terminal.

### Background Art

Generally, when a document is printed by a printing device, a document that has been printed in the past may be redundantly printed. In order to reduce waste of resources, various proposals have been made to avoid redundant printing (for example, refer to Patent Document 1).

Meanwhile, information may be transferred from a host computer to a mobile display terminal and displayed on the display screen of the display terminal such that the information may be viewed. However, there are some cases in which printing is desired although the information can be viewed on the display terminal. As a need in this case, a use method is conceivable in which only the latest version with an updated agreement, drawing, working procedure or the like is printed as an original copy, and a past version is viewed on the display terminal.
Patent Document 1: Japanese Laid-Open Patent Publication No. 2001-71593.

When only the latest version is desired to be printed as described above, if all the documents in the display terminal are set to be printable, there is a possibility that a printed old version may be assumed as the original copy and this may lead to an erroneous action. With the above-described related art, although redundant printing can be avoided, printing of a document other than the latest one cannot be prevented. Further, if a newer version is created during a period from when a printing instruction is input until when printing is performed by the printing device, the printing of the latest version cannot be set afterward because print data has already been transmitted.

### Disclosure of the Invention

The present disclosure has been made to solve the above-described problems, and it is an object thereof to provide a display terminal and a printing control program that are capable of controlling a version of a file to which a printing instruction is issued.

According to a display terminal of the present disclosure, there is provided a display terminal that displays a document file such that the document file can be viewed and includes storage means for storing document files in groups, selection means for selecting a file to be printed from among the document files stored in the storage means, and printing instruction transmission means for, when a printing instruction is transmitted to a printing device, transmitting to the printing device a printing instruction of a file that indicates a predetermined attribute, among files in a group to which the selected file selected by the selection means belongs.

Further, according to a printing control program of the present disclosure, there is provided a program that causes a computer to function as various processing means for the display terminal of the present disclosure.

### Brief Description of the Drawings

FIG. 1 is a system configuration diagram showing an overview of a printing system according to the present embodiment.
FIG. 2 is a block diagram showing an electrical configuration of a display terminal 1.
FIG. 3 is a schematic diagram showing a file structure in a memory card 19.
FIG. 4 is a schematic diagram showing a configuration of a print queue storage area of a RAM 12.
FIG. 5 is a flowchart of main processing of the display terminal 1.
FIG. 6 is a flowchart of selected document printing processing that is performed in the main processing.
FIG. 7 is a flowchart of print queue creation processing that is performed in the main processing.
FIG. 8 is a flowchart of print queue execution processing that is performed in the main processing.

### Best Mode for Carrying Out the Invention

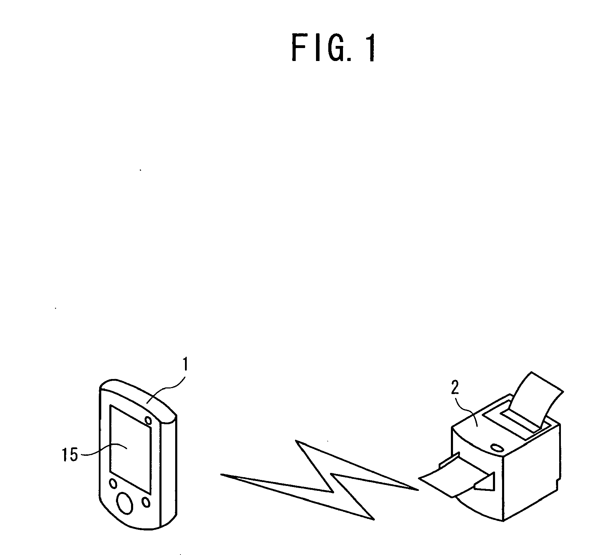

Hereinafter, an embodiment of the present disclosure will be described with reference to the drawings. First, an overview of a printing system that includes a display terminal 1 and a printer 2 of the present embodiment will be described with reference to FIG. 1. The display terminal 1 is a mobile type of terminal that is provided with a display portion 15, downloads a document file that includes a character and/or an image via a network or from an external device such as a PC, and causes the display portion 15 to display the document file. Further, the display terminal 1 may be connected to the printer 2 that is a printing device, and can cause the printer 2 to perform printing of the document file stored in the display terminal 1. As long as the printer 2 can be connected to the display terminal 1 to receive print data and can perform printing, the printer 2 may be a laser or inkjet printer, for example, and there is no limitation on the printing method. The display terminal 1 and the printer 2 may be connected wiredly or wirelessly. Further, the display terminal 1 and the printer 2 do not need to be constantly connected. When a printing instruction operation is inputted, a print queue may be created to store print data. When the printer 2 is connected, the print data may be sequentially transmitted according to the print queue and printing may be performed. Further, as described later, in the present embodiment, print data is created in the display terminal 1 and transmitted to the printer 2, however, document file data itself may be transmitted from the display terminal 1, and developed into print data on the printer 2 side.

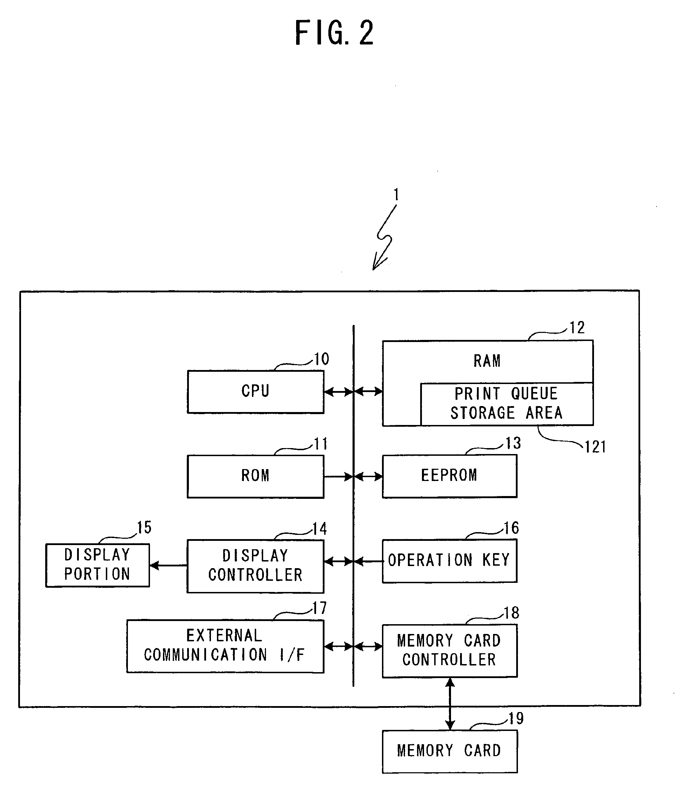

Next, an electrical configuration of the display terminal 1 will be described with reference to FIG. 2 to FIG. 4. As shown in FIG. 2, the display terminal 1 is provided with a CPU 10 that controls the display terminal 1. A ROM 11, a RAM 12, an EEPROM 13, a display controller 14, an operation key 16, an external communication interface (I/F) 17, and a memory card controller 18 are connected to the CPU 10 via a bus. The ROM 11 stores a program for operating the display terminal 1, and the like. The RAM 12 temporarily stores various types of data. The EEPROM 13 stores a user ID that is a code for identifying a user who is using the display terminal 1, and the like. The display controller 14 performs control of the display portion 15. The operation key 16 accepts an input from the user. The external communication interface 17 is used to connect to another device, such as a PC (not shown in the drawing), the printer 2, and the like. The memory card controller 18 is used to connect a memory card 19. As described later, the memory card 19 is provided with an area for storing document files downloaded from the PC or the like. Further, the RAM 12 is provided with a print queue storage area 121 that stores the print queue that is created if a printing instruction of a document file is inputted when the printer 2 is not connected.

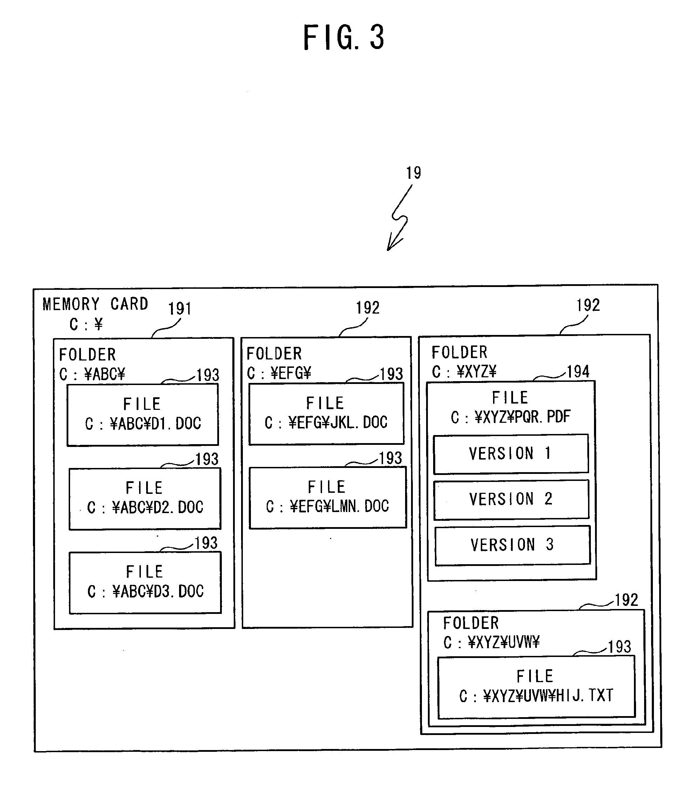

Next, a file structure in the memory card 19 will be described with reference to FIG. 3. As shown in FIG. 3, in the memory card 19, document files 193 and 194 are classified into groups and stored in folders 191 and 192. More specifically, the three files 193 "D1. DOC", "D2. DOC" and "D3. DOC" are stored in a "folder ABC". Further, the two files 193 "JKL. DOC" and "LMN. DOC" are stored in a "folder EFG". Further, a file 194 "PQR. PDF" and a "folder UVW" are stored in a "folder XYZ", and further, a file 193 "HIJ. TXT" is stored in the "folder UVW". Among these files, the files 193 are normal document files, and the file 194 is a (version-controlled) file having a plurality of versions of data. Further, the folder 191 is a folder with a version control attribute, and the folders 192 are normal attribute (not version control attribute) folders.

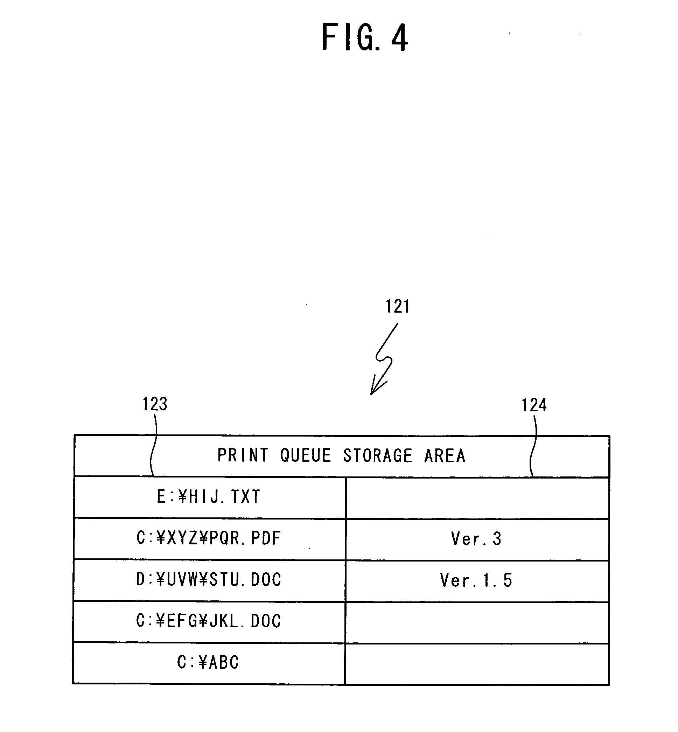

Next, the print queue storage area 121 in the RAM 12 will be described with reference to FIG. 4. When the printer 2 is not connected, if a printing instruction of a document file stored in the memory card 19 is issued, the content of the printing instruction is sequentially stored in the print queue. Then, next time the printer 2 is connected, the printer 2 performs printing sequentially in accordance with the content of the printing instruction stored in the print queue. Each record (print job) in the print queue includes a print target name 123 and a version 124, and accumulated and stored every time a printing instruction operation is performed. Then, when the printer 2 is connected, printing is performed sequentially from the bottom up (first-in first-out). A name of a selected file or a name of a folder to which the selected file belongs is stored in the print target name 123. As described below, when the selected document file is stored in a version-controlled folder, not the file name, but the folder name is stored as the print target name 123. When printing is performed, the latest version in the folder is printed. A version name is stored in the version 124 only when the printing instruction operation is performed with the version specified.

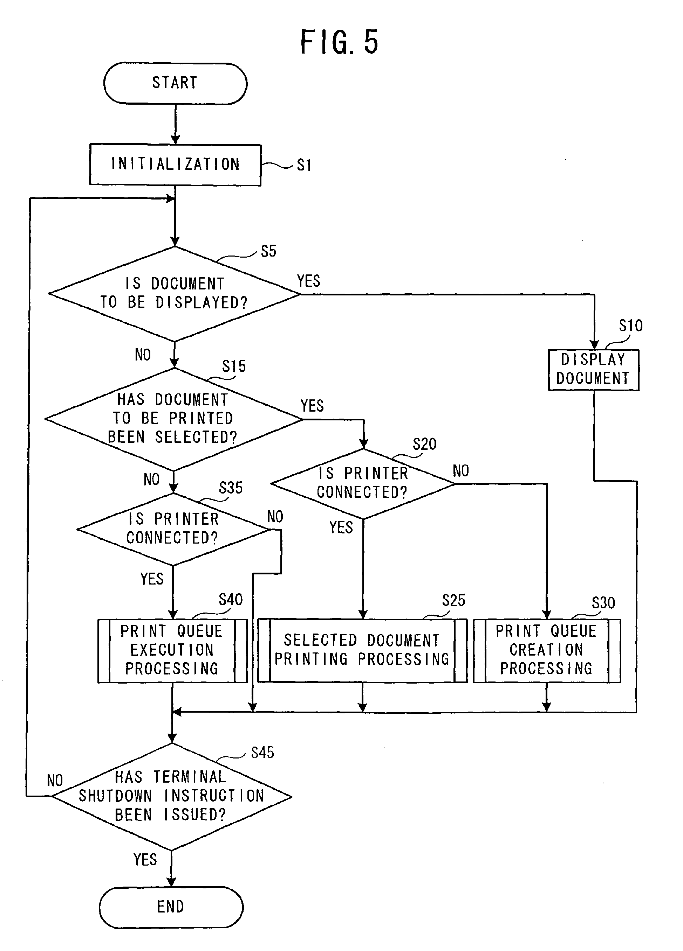

Next, an operation of the display terminal 1 configured as described above will be described with reference to FIG. 5 to FIG. 8. When the power supply is turned on, the program stored in the ROM 11 is read out by the RAM 12 and activated, and main processing shown in FIG. 5 is performed by the CPU 10 in the display terminal 1. First, initialization is performed in which the storage area of the RAM 12 is cleared and various kinds of initial values are reset to default values (S1). Then, it is determined whether display of a document has been instructed (S5). The display of the document may be performed such that, first, a list screen like a table of contents is displayed, for example, and allows the user to make a selection using the operation key 16. If the display of the document has been instructed (YES at S5), the selected document is read out from the memory card 19, and displayed on the display portion 15 such that the selected document can be viewed (S10). Next, it is determined whether a terminal shutdown instruction (power supply OFF) has been issued (S45). If the shutdown instruction has not been issued (NO at S45), the processing returns to S5 and it is determined again whether the document has been displayed.

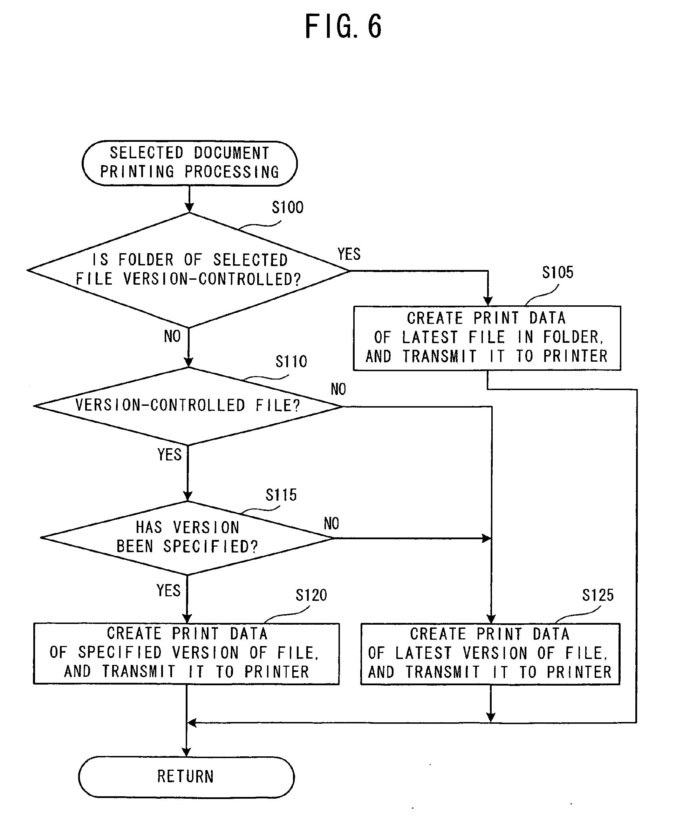

If the display of the document has not been instructed (NO at S5), next it is determined whether a document to be printed has been selected (S 15). The document to be printed may be selected by issuing an instruction to print the document being displayed, or by issuing a printing instruction from the list screen. If the document to be printed has been selected (YES at S 15), next it is determined whether the printer 2 is currently connected (S20). If the printer 2 is currently connected (YES at S20), the selected document can be printed immediately, so a selected document printing processing is performed (S25). Then, the processing proceeds to S45 and it is determined whether the terminal shutdown instruction (power supply OFF) has been issued. The selected document printing processing will be described below in detail with reference to FIG. 6.

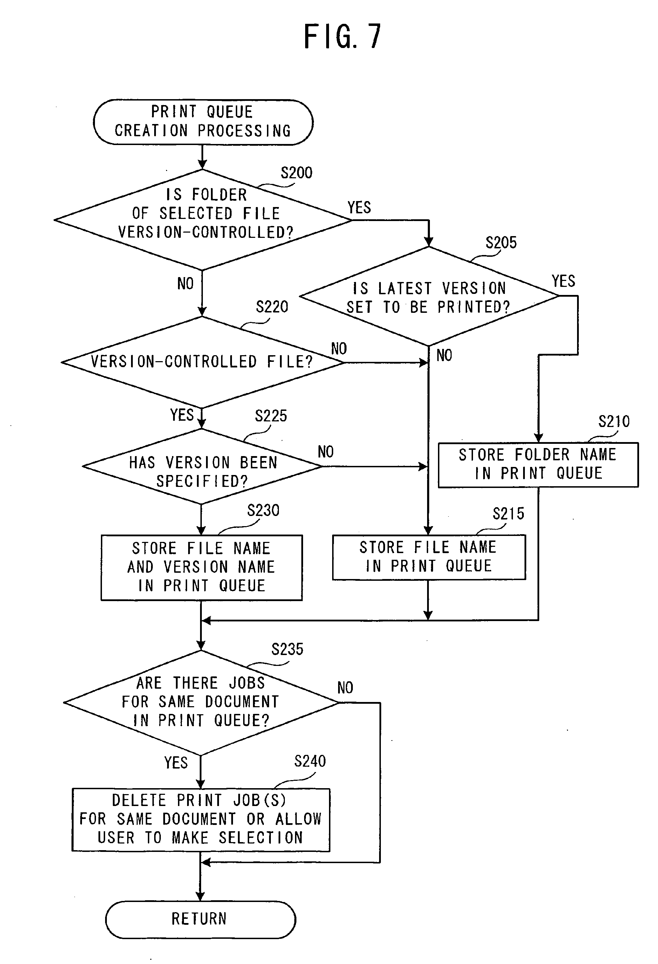

If the printer 2 is not currently connected (NO at S20), a print queue creation processing, in which the printing instruction of the selected document is accumulated in the print queue, is performed (S30), and then the processing proceeds to S45 and it is determined whether the terminal shutdown instruction (power supply OFF) has been issued. The print queue creation processing will be described below in detail with reference to FIG. 7.

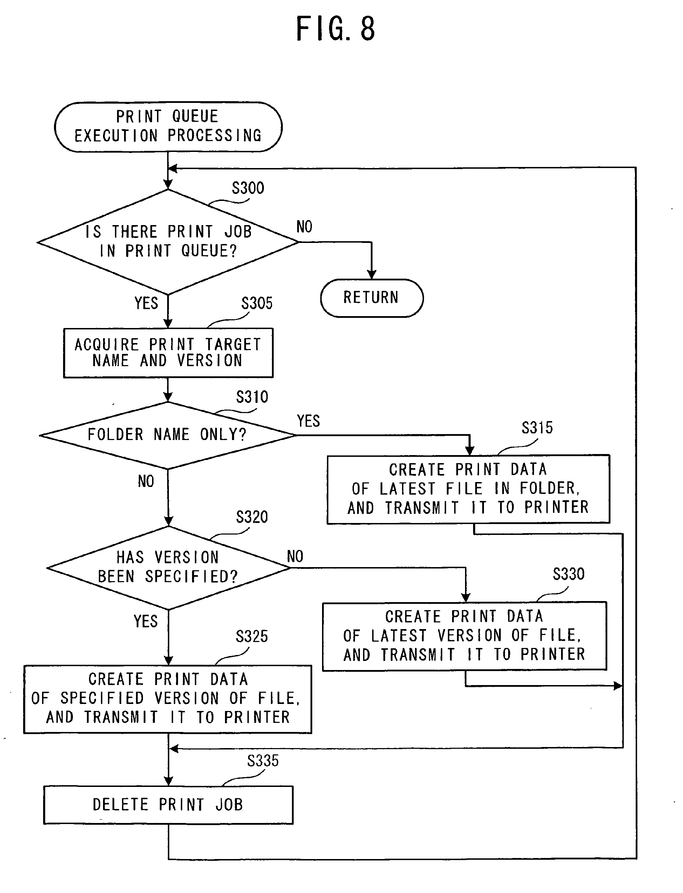

On the other hand, when the document to be printed has not been selected (NO at S15), it is determined whether the printer 2 has been connected (S35). If the printer 2 has not been connected (NO at S35), the processing proceeds to S45 and it is determined whether the terminal shutdown instruction (power supply OFF) has been issued. If the printer 2 has been connected (YES at S35), a print queue execution processing, in which the printing instructions accumulated in the print queue are sequentially executed, is performed (S40), and then the processing proceeds to S45 and it is determined whether the terminal shutdown instruction (power supply OFF) has been issued. The print queue execution process will be described below in detail with reference to FIG. 8.

The display terminal 1 repeatedly performs the above-described processing until the terminal shutdown instruction is issued (YES at S45).

Next, the selected document printing processing, which is performed if the document to be printed is selected while the printer 2 is connected (YES at S 15, YES at S20 in FIG. 5), will be described with reference to FIG. 6. First, an attribute of the folder in which the selected document file is stored is checked, and it is determined whether the folder is a version-controlled folder (S100). If the folder is the version-controlled folder (YES at S100), regardless of whether the specified document file is the latest version of the file, print data of the latest file is created and transmitted to the printer 2 (S105). Then, the processing returns to the main processing. Here, such processing is performed based on the assumption that the version to be printed is required to be the latest. It may be ensured by a user setting that the latest version is printed even if a file of a version other than the latest version is selected. Alternatively, it may also be selectable whether the printing of the specified document itself is allowed. In this case, even if the file is in the version-controlled folder, it may be further determined whether the setting requires printing of the latest version, and then the processing may be divided based on whether the document file itself is printed or the latest version of the file is printed.

If the folder is not a version-controlled folder (NO at S100), it is determined whether the file itself performs version control (whether a plurality of versions of data is included in one file) (S110). If the file is a version-controlled file (YES at S110), it is determined whether printing of a particular version has been specified (S115). If the version has been specified (YES at S115), print data of the specified version is created and transmitted to the printer 2 (S120). Then, the processing returns to the main processing. Note that, here, when printing of a version-controlled file is specified, a version other than the latest version is allowed to be printed. In a case where the latest version is strongly required as the version to be printed, it may be ensured that the latest version is printed even if the version has been specified. In this case, the processing at S115 and S120 may be omitted, and the processing may proceed to S125.

When the version has not been specified (NO at S115), or when the file is not a version-controlled file (NO at S110), print data of the latest version of the file is created and transmitted to the printer 2 (S125). Then, the processing returns to the main processing. In a case where the file is not version controlled, there is only one version, so that the file is always the latest version.

Next, the print queue creation processing, which is performed if a document to be printed is selected when the printer 2 is not connected (YES at S15, NO at S20 in FIG. 5), will be described with reference to FIG. 7. First, an attribute of the folder in which the selected file is stored as the document to be printed is checked, and it is determined whether the folder is a version-controlled folder (S200). When the folder is the version-controlled folder (YES at S200), it is determined whether the latest version is set to be always printed (S205). Here, whether a version other than the latest version is allowed can be set by user setting, however, the present disclosure is not limited to this. The latest version may be set to be always printed. In this case, the determination at S205 is not necessary.

If the latest version is set to be always printed (YES at S205), the name of the folder in which the selected document file is stored is stored in the print queue (S210). Then, the processing proceeds to S235. For example, in the memory card 19 in the state shown in FIG. 3, it is assumed that the "D2. DOC" in the "folder ABC" is selected as the document to be printed. If the latest version is set to be always printed, the folder name "C: ¥ABC" is stored in the print queue as shown in FIG. 4. Because the folder name is stored in the print queue in this manner, the latest version of the file ("D3. DOC" in the example shown in FIG. 3) in the folder is printed when printing is performed in the print queue execution processing, which will be described below.

If the setting allows printing of a version other than the latest version (NO at S205), the file name of the selected document file is stored in the print queue (S215). Then, the processing proceeds to S235.

If the folder is not the version-controlled folder (NO at S200), next it is determined whether the file itself controls versions (whether a plurality of versions of data is included in one file) (S220). If the file is a version-controlled file (YES at S220), it is determined whether printing of a particular version has been specified (S225). If the version has been specified (YES at S225), the file name of the selected document file and the specified version name are stored in the print queue (S230). For example, as in the second line from the top in FIG. 4, the file name "C: ¥XYZ¥PQR. PDF" and the version name "Ver. 3" are stored. Then, the processing proceeds to S235. Note that, in this case, when printing of the version-controlled file is specified, printing of a version other than the latest version is set to be allowed. If the latest version is strongly required as the version to be printed, it may be ensured that the latest version is printed even if the version has been specified. In this case, the processing at S225 and S230 may be omitted, and the processing may proceed to S215.

Thus, the storing of the selected document file into the print queue is completed, and then it is determined whether there are print jobs for the same document in the print queue (S235). If there are print jobs for the same document (YES at S235), one is left and the other(s) is deleted for the same document. Alternatively, the situation may be shown to the user so as to allow the user to select whether to delete or leave the other(s) (S240). Then, the processing returns to the main processing. Note that, it may be happen that a printing instruction is issued twice when the user is not aware that the documents are the same, in this case, the processing at S235 and S240 is convenient for automatically deleting one of them or indicating the situation to the user, but is not essential.

Next, the print queue execution processing, which is performed when the printer 2 is connected (YES at S35 in FIG. 5), will be described with reference to FIG. 8. First, it is determined whether there is a print queue job stored in the print queue (S300). When none is stored in the print queue even if the printer 2 is connected (NO at S300), the processing returns to the main processing.

If there is a print queue job (YES at S300), the print target name 123 and the version 124 of the oldest job (in the lowest line in FIG. 4) are acquired (S305). Then, it is determined whether the acquired print target name includes only the folder name (S310). If only the folder name is included, the folder is a version-controlled folder, and the latest file is specified to be printed (S210 in FIG. 7). Print data of the latest file in the folder is created and transmitted to the printer 2 (S315). Then, the print job just processed is deleted from the print queue (S335), and the processing returns to S300.

If the acquired print target name does not include only the folder name (NO at S310), next it is determined whether the version has been specified (S320). if the version has been specified (YES at S320), print data of the specified version of the file corresponding to the print target name is created and transmitted to the printer 2 (S325). Then, the print job just processed is deleted from the print queue (S335), and the processing returns to S300.

If the version has not been specified (NO at S320), print data of the latest version of the file corresponding to the print target name is created and transmitted to the printer 2 (S330). Then, the print job just processed is deleted from the print queue (S335), and the processing returns to S300. If the version name has not been specified for the file, it corresponds to a case where the file is a version-controlled file and the latest version in the file is to be printed, or a case where the file is not a version-controlled file. In the case where the file is not version-controlled file, there is only one version, and the latest version is the file itself.

When the processing at S315, S325 or S330 is completed, the print job that has been processed is deleted from the print queue (S335), and the processing returns to S300. If there is a print queue job (YES at S300), the above-described processing is repeated. If there is no print queue job (NO at S300), the processing returns to the main processing.

As described above, according to the display terminal 1 of the present embodiment, in a case where versions are controlled in a unit of a folder or a file, when the user specifies a document that the user wants to print, the latest version is printed if the document is version-controlled by the folder, and printing is performed based on the latest version of data if the document is version-controlled by the file. While the display terminal 1 is connected to the printer 2, the print data is directly created and transmitted, and when the display terminal 1 is not connected to the printers, the print data is stored in the print queue. When folder-based version control is performed, only the folder name is stored in the print queue, and when file-based version control is performed, the file name is stored in the print queue. When the printer 2 is connected, the print queue is read out. If the folder name is stored, print data of the latest file in the folder is created and transmitted. If the file name is stored, print data of the latest version of the file is created and transmitted. Moreover, by user setting, the printing of a file with a version other than the latest version may be set to be allowed. With this configuration, a need may be met that various versions of a file may be viewed when the file is viewed, and also only the latest version may be printed. If the user may make the setting, it is possible to flexibly set restrictions on the print version in consideration of the access right.

Note that, in the above-described embodiment, the display terminal 1 creates print data, however, the present disclosure is not limited to this. For example, when a printing instruction is received, the printer 2 may acquire print data from an external device that stores the print data, and may perform printing based on the print data. Alternatively, when the printing instruction is received, the printer 2 may generate print data.

Further, in the above-described embodiment, only the determination is made as to whether the version is the latest version, however, instead of simply determining whether the version is the latest one, the official latest version, excluding a beta version and the like, may be printed. In this case, it may be determined whether a predetermined key word such as "official latest version" is included in the file name, as an attribute. Alternatively, control may be performed such that, when the file is saved, the user is allowed to input an indication that the file is the official version and a flag is thereby set for the official version, and when a printing instruction is issued, the file with the flag is printed.

With the display terminal of the present disclosure, document files are stored in groups such that the document files are stored in folders. When a document file to be printed is selected and a printing instruction thereof is transmitted to the printing device, the printing instruction of a file that indicates a predetermined attribute in the group to which the selected file belongs is transmitted to the printing device. As the predetermined attribute, for example, the latest version, the official version, and the latest official version may be set. Thus, even when a file with a plurality of versions exists in the group and an old version of the file in the group is selected, it may be ensured that the latest or official version of the file is printed. Therefore, the above arrangement may be effective in a case where it is desired that an old version, a beta version and the like are also allowed to be viewed, but only the latest official version is allowed to be printed.

Further, with the display terminal of the present disclosure, based on the attribute of the group, it is distinguished whether versions are controlled by the group. When the attribute is a group control attribute, a printing instruction of a file with the predetermined attribute in the group is transmitted. When the attribute is not the group control attribute, a printing instruction of the selected file itself is transmitted. Therefore, control of the print version may be flexibly set for each group.

Further, with the display terminal of the present disclosure, when a file is selected, group identification information of the group to which the file belongs may be stored. When the printing device is connected, in accordance with the stored group identification information, the printing instruction of the file with the predetermined attribute in the group may be transmitted. That is, before the printing device is connected, the group identification information, not the developed print data, may be stored as printing instruction information. Accordingly, even if a new version is created during a period from when the printing instruction is issued until when the printing device is connected, the printing instruction of the file with the predetermined attribute, such as the latest version, the official version or the like at the time when the printing device is connected, may be transmitted, and printing thereof may be performed.

Further, with the display terminal of the present disclosure, based on the attribute of the group, it is distinguished whether versions are controlled by the group. When the attribute is the group control attribute, the group identification information may be stored when a file is selected. When the attribute is not the group control attribute, file identification information may be stored when the file is selected. Therefore, control of the print version may be flexibly set for each group.

Further, with the display terminal of the present disclosure, the printing instruction of the latest file in the group may be transmitted to the printing device, as the file that indicates the predetermined attribute. Therefore, even when a file with a plurality of versions exists in the group, and an old version of the file in the group is selected, it may be ensured that the latest version of the file is printed. Therefore, the above arrangement may be effective when it is desired that an old version is also allowed to be viewed, but only the latest version is allowed to be printed.

Furthermore, with the display terminal of the present disclosure, a file that includes a plurality of versions of data may be stored. When a file is selected, the file identification information of the file may be stored. When the printing device is connected, in accordance with the stored file identification information, the printing instruction of the data that indicates the predetermined attribute at the time when the printing instruction is issued may be transmitted. Accordingly, even if a new version is created during a period from when the printing instruction is issued until when the printing device is connected, the printing instruction of the version that indicates the predetermined attribute, such as the latest version, the official version or the like at the time when the printing device is connected, may be transmitted.

Moreover, with the display terminal of the present disclosure, the printing instruction of the latest version may be transmitted to the printing device, as the version that indicates the predetermined attribute. Accordingly, even if a new version is created during a period from when the printing instruction is issued until when the printing device is connected, the latest version at the time when the printing device is connected may be printed.

In addition, a printing control program of the present disclosure makes it possible to achieve operational effects as various processing means of the display terminal of the present disclosure, by causing a computer to execute the program.

## Claims

1. A display terminal that displays a document file such that the document file can be viewed, **characterized by** comprising:
storage means for storing document files in groups;
selection means for selecting a file to be printed from among the document files stored in the storage means; and
printing instruction transmission means for, when a printing instruction is transmitted to a printing device, transmitting to the printing device a printing instruction of a file that indicates a predetermined attribute, among files in a group to which the selected file selected by the selection means belongs.

2. The display terminal according to claim 1, **characterized by** further comprising:
group version control determination means for determining whether an attribute of the group to which the selected file belongs is a group control attribute that indicates that versions are controlled in the group, wherein
if it is determined by the group version control determination means that the attribute is the group control attribute, the printing instruction transmission means transmits to the printing device the printing instruction of the file that indicates the predetermined attribute, among the files in the group to which the selected file belongs, and if it is determined that the attribute is not the group control attribute, the printing instruction transmission means transmits to the printing device a printing instruction of the selected file.

3. The display terminal according to claim 1, **characterized by** further comprising:
identification information storage means for storing group identification information of the group to which the selected file selected by the selection means belongs; and
connection determination means for determining whether the printing device is connected, wherein
when it is determined by the connection determination means that the printing device is connected, if the group identification information is stored in the identification information storage means, the printing instruction transmission means transmits the printing instruction of the file that indicates the predetermined attribute, among the files in the group.

4. The display terminal according to claim 3, **characterized by** further comprising:
group version control determination means for determining whether an attribute of the group to which the selected file selected by the selection means belongs is a group control attribute that indicates that versions are controlled in the group;
storage control means for causing the identification information storage means to store the group identification information to which the selected file belongs if it is determined by the group version control determination means that the attribute is the group control attribute, and for causing the identification information storage means to store file identification information of the selected file if it is determined that the attribute is not the group version control attribute, wherein
if the file identification information is stored in the identification information storage means, the printing instruction transmission means transmits a printing instruction of a file corresponding to the file identification information.

5. The display terminal according to any one of claims 1 to 4, **characterized in that**
the printing instruction transmission means transmits to the printing device a printing instruction of a latest file in the group, as the file that indicates the predetermined attribute.

6. A display terminal that displays a document file such that the document file can be viewed, **characterized by** comprising:
storage means for storing document files including a plurality of versions of data;
selection means for selecting a file to be printed from among the document files stored in the storage means;
identification information storage means for storing file identification information of the selected file selected by the selection means;
connection determination means for determining whether a printing device is connected; and
printing instruction transmission means for, when it is determined by the connection determination means that the printing device is connected, transmitting a printing instruction of data of a version that indicates a predetermined attribute, in a file corresponding to the file identification information stored in the identification information storage means.

7. The display terminal according to claim 6, **characterized in that**
the printing instruction transmission means transmits to the printing device a printing instruction of a latest version as the version that indicates the predetermined attribute.

8. A printing control program for causing a computer to function as various processing means of the display terminal according to any one of claims 1 to 7.
